Europäisches Patentamt

European Patent Office

Office européen des brevets

(19)

(11) **EP 0 734 755 B1**

(12) **EUROPÄISCHE PATENTSCHRIFT**

(45) Veröffentlichungstag und Bekanntmachung des Hinweises auf die Patenterteilung:
**03.03.1999 Patentblatt 1999/09**

(51) Int. Cl.$^6$: **B01D 53/50**, A62D 3/00, C04B 11/036

(21) Anmeldenummer: **95107657.9**

(22) Anmeldetag: **19.05.1995**

(54) **Verfahren zur Trockenentschwefelung von Rauchgasen**

Dry process for the removal of sulfur from waste gases

Procédé à sec pour la désulphurisation des gaz d'échappement

(84) Benannte Vertragsstaaten:
**DE DK FR**

(30) Priorität: **31.03.1995 DE 19512030**

(43) Veröffentlichungstag der Anmeldung:
**02.10.1996 Patentblatt 1996/40**

(73) Patentinhaber:
**Heidelberger Zement AG**
**D-69120 Heidelberg (DE)**

(72) Erfinder:
• **Ziegler, Jochen Dipl.-Ing.**
**D-89609 Schelklingen (DE)**

• **Erhard, Helmut S. Dipl.-Ing.**
**D-69168 Wiesloch (DE)**

(74) Vertreter:
**Schmid, Rudolf, Dipl.-Ing.,**
**Patentanwalt**
**Seckenheimer Strasse 36a**
**68165 Mannheim (DE)**

(56) Entgegenhaltungen:
**DE-A- 3 428 502          DE-A- 3 818 630**
**DE-A- 4 004 866**

**Beschreibung**

Die Erfindung betrifft ein Verfahren zur trockenen Rauchgasentschwefelung gemäß dem Oberbegriff des Anspruchs 1.

Zur Trockenentschwefelung von Rauchgasen unterschiedlichen Ursprungs sind verschiedene Verfahren bekannt.

So wird ein derartiges Verfahren in der DE-OS 31 17 601 vorgeschlagen zur Trockenentschwefelung und Beseitigung anderer Verunreinigungen in Rauchgasen von Kohlekraftwerken oder Müllverbrennungsanlagen, bei dem als Absorptionsmittel (Additiv) beispielsweise trockenes Kalkhydrat verwendet wird. Nach diesem Verfahren wird das Additiv unmittelbar in die Rohgasstrecke, ggf. vor einem in dieser liegenden Reaktor eingegeben und einer nachgeschalteten Filtereinrichtung zugeführt. Der hier anfallende Feststoffaustrag durchläuft einen oder mehrere Zyklonabscheider und kann dann aus der zugehörigen Anlage getrennt vom gereinigten Abgas ausgetragen werden.

Neben dieser trockenen Reinigung sind auch "nasse" Verfahren bekannt.

In der DE-OS 33 34 106 wird ein Naßverfahren offenbart, bei dem die alkalischen Ca-Verbindungen als Absorptionsmittel (Additiv) in flüssiger Form in das Rohgas eingedüst werden.

Nachteilig bei diesen Verfahren ist, daß das mehrfach stöchiometrisch zugegebene Additiv, bezogen auf die Schadstoffe, nicht intensiv genug umgesetzt werden kann und insbesondere bei Schwankungen eine optimale Anpassung der Dosierung kaum möglich ist.

Eine bessere Ausnutzung der Additive und höhere Rauchgasentschwefelungsgrade sollen gemäß der DE-OS 40 04 866 für Kessel mit Mühlen- und Rostfeuerungen erreicht werden, indem Suspensionen enthaltend schefeldioxidbindende Additive, mit erhöhtem Druck über bekannte Düsensysteme in die rauchgasführenden Freiräume eingebracht werden.

Nachteilig u.a. ist bei diesem Verfahren, daß die Temperatur der Suspension nach der Druckerhöhung bestimmte Werte nicht über- bzw. unterschreiten darf; so muß die Suspension durch indirekte Wärmeübertragung so eingestellt werden, daß diese mindestens 10 °K über der Temperatur des Waserdampftaupunktes des zu reinigenden Rauchgases, aber höchstens 3 °K unter der zum Druck der Suspension vor den Düsen gehörenden Siedetemperatur liegt.

Es ist ferner bekannt, daß die Verwendung schwefelhaltiger Steinkohle als Brennmaterial nur bei gleichzeitiger Entschwefelung des Rauchgases sinnvoll ist. Die Kosten der dazu benötigten Chemikalien und Apparate heben aber den Preisvorteil der Kohle, zumindest teilweise wieder auf. Ob und inwieweit dieser Brennstoff konkurrenzfähig bleiben kann, hängt ganz wesentlich von den Nebenkosten ab, welche durch die Entschwefelung der Rauchgase verausgabt werden, und jede Verminderung dieser Nebenkosten wird die Konkurrenzfähigkeit dieser Kohle verbessern.

Der vorliegenden Erfindung liegt daher die Aufgabe zugrunde, ein trockenes Rauchgasentschwefelungsverfahren für Rauchgase aus Zementdrehrohröfen zur Verfügung zu stellen, das es ermöglicht, eine wirtschaftliche Nutzung der Additive mit einem den Auflagen entsprechenden Entschwefelungsgrad zu erreichen.

Diese Aufgabe wird durch die erfindungsgemäßen Merkmale des Anspruchs 1 gelöst. Vorteilhafte Weiterbildungen der Erfindung ergeben sich aus den Unteransprüchen.

Das erfindungsgemäße Verfahren stellt eine technisch einfache Lösung der Entschwefelung von Rauchgasen bei der Zementklinkerherstellung dar.

Apparativ ist das Verfahren gemäß Erfindung mit geringstmöglichen Investitionskosten zu realisieren. Es ist ohne weiteres sowohl an einem empfindlichen Lepolbrennofen mit Vorwärmesystem als auch an einem Schwebegaswärmetauscherofen oder einem langen Drehofen einsetzbar. Der entstandene Anhydrit verbleibt in der Zementklinkermasse mit der Folge, daß einerseits keine Filterstäube entstehen und andererseits der Anteil an dem werkmäßig dem Klinker beizumengenden $CaSO_4$ reduziert wird.

Der Erfindung liegt die Erkenntnis zugrunde, daß das an sich bekannte Einblasen des Additivs in die Rauchgase einer der kritischen Punkte des Vefahrens ist.

Bei der Umsetzung

$$SO_2 \rightarrow CaSO_4$$

mittels bekannter Additive, wie CaO oder $Ca(OH)_2$, verlangsamt sich mit der Zeit die $SO_2$-Absorptionsgeschwindigkeit.

Dies ist dadurch zu erklären, daß bei der Absorption von $SO_2$ einerseits die $SO_2$-Konzentration an der Oberfläche der CaO-Teilchen sinkt und anderersetis sich eine $CaSO_4$-Schicht an der Oberfläche der CaO-Teilchen bildet.

Ferner findet durch die Beschickung einer Ofenzone mit dem pulverförmigen Additiv der Kontakt zwischen Additiv und Abgas innerhalb eines großen Raums statt, so daß der Kontaktwirkunsgrad niedrig ist. Abgesehen davon stellt - bei Verwendung von $Ca(OH)_2$ als Additiv - der Übergang von $Ca(OH)_2$ in CaO eine endotherme Reaktion dar, welche die Ofengase abkühlt.

Vor diesem Hintergrund wird erfindungsgemäß das Additiv am Ofenkopf über eine pneumatisch ein- und ausfahrbare Lanze gerichtet eingeblasen, wobei unter "Ofenkopf" der feststehende Übergang zwischen Drehrohrauslauf und Klinkerkühlereinlauf zu verstehen ist. Über dessen Querschnitt wird heiße Luft aus dem Kühler der Flamme als Verbrennungsluft zugeführt.

Um empfindliche Vorwärmersysteme (beispielswiese Lepolrostvorwärmer) nicht zu stören und der Inaktivierung der CaO-Teilchen entgegenzuwirken, ist es wesentlich, daß die Additivpartikel so kurz wie möglich in Kontakt mit den Rauchgasen der Hochtemperaturzone (Flammbereich) bleiben. Dies geschieht erfindungsgemäß dadurch, daß ein Einblaswinkel von 2-12° schräg zur Ofenachse gewählt und mit hoher Geschwindigkeit eingeblasen wird. Somit werden durchschießende bzw. zu weit geförderte Additivpartikel am anderen Ende des Ofenrohrs abgeschieden.

Die Einblasgeschwindigkeit ist erfindungsgemäß mit 20-80 m/s so hoch ausgelegt, daß nahezu das gesamte Ofenrohrvolumen als Reaktionsraum genutzt werden kann. Die Auslegungsdaten der Lanze (Länge, Durchmesser) zur Erzeugung eines gerichteten Strahles hängen von folgenden Parametern ab:

- Ofenrohrdimension (Länge, Durchmesser),
- Branntkalk- oder Kalkhydratqualität (Kalkgehalt, Feinheit),
- absolute Höhe der abzusenkenkenden $SO_2$-Emission und damit Branntkalk- oder Kalkhydratmenge,
- Förderluftmenge.

Nach einer Ausführungsform der Erfindung wird als Förderluft Umgebungsluft verwendet. Alternativ zur Umgebungsluft kann erfindungsgemäß auch heiße Luft aus dem Klinkerkühler eingesetzt werden. Die Temperatur dieser Heißluft hängt nur von den Auslegungsdaten der mit ihr in Berührung kommenden Maschinen sowie von der Hitzebeständigkeit der Förderleitung ab. Die Verwendung von Heißluft hat lediglich einen Energiespareffekt für das Ofensystem, für das Verfahren der $SO_2$-Absenkung ist die Höhe der Förderlufttemperatur unerheblich.

Im folgenden wird die Erfindung anhand von Zeichnungen und Ausführungsbeispielen näher beschrieben.

Es zeigen

Figur 1     schematisch einen Querschnitt durch einen Lepolofen mit daran anschließenden Saugkammern

Figur 2     einen Schnitt A-A gemäß Figur 1, aus dem der Einblaswinkel ersichtlich ist

Figur 3     schematisch einen Querschnitt durch einen Schwebegaswärmetauscherofen

Figur 4     schematisch einen Querschnitt durch einen langen Trockenofen

Figur 5     den Aufbau einer Einblaslanze.

Nach dem Lepolverfahren wird das Rohmehl in Form von befeuchteten Granalien (Pellets) einem Wanderrost 6 aufgegeben. In der Trockenkammer 10 werden die Granalien bei ca. 200 bis 300°C getrocknet, in der Heißkammer 9 findet eine weitere Erhitzung bis auf über 1000° statt.

Die zu entschwefelnden Rauchgase des Hauptbrenners 1 werden zweimal durch das Granalienbett durchgesaugt (einmal von der Heißkammer 9 in die 1. Saugkammer 11 und anschließend von der Trockenkammer 10 in die 2. Saugkammer 12) und verlassen über das zweite Gebläse (Rauchgasgebläse) den Vorwärmerbereich.

Die Entschwefelung der Rauchgase am Lepolofen scheitert durch eine Dosierung von $SO_2$-Additiven im Vorwärmerbereich aufgrund folgender Umstände:

- bei Einbringung dieser Stoffe in die Heißkammer 9 oder Trockenkammer 10 oder 1. Saugkammer 11 saugt sich der Wanderrost mit Kalkhydrat- oder Branntkalkstaub in kürzester Zeit voll.

Aufgrund des dann stark ansteigenden Widerstandes zwischen den Bereichen 9 und 11 oder 10 und 12 kann das Rauchgas nur noch unvollständig gefördert werden, es entstehen erhebliche Mengen an Kohlenmonoxid. Die Entstehung von Kohlenmonoxid produziert eine starke Freisetzung von zusätzlichem $SO_2$, zudem muß der für den Betrieb der Anlage notwendige Brennstoff erheblich gedrosselt werden. Dies führt letztendlich zur Produktion einer Fehlcharge.

- Bei Einbringung dieser Stoffe in die 2. Sauagkammer 12 oder danach verlassen diese den Vorwärmer und werden im Filter 13 abgeschieden.

Da die Reaktion zwischen $SO_2$ und Branntkalk/Kalkhydrat einer deutlichen Überstöchiometrie unterworfen ist, sind im Filterstaub somit nicht nur Rauchgasgipsanteile enthalten, sondern auch erhebliche und zudem schwankende Anteile an unreagiertem Kalkhydrat oder Branntkalk. Der Filterstaub wird in der Regel der Zememtmahlung beigegeben, wobei Kalkhydrat- oder auch Branntkalkanteile in größeren Mengen aufgrund ihrer treibenden Wirkung die spezifischen Eigenschaften des Zementes gefährden bzw. zerstören.

Sollte der Filterstaub nicht der Zementklinkermasse beigemengt werden, so muß der Filterstaub entsorgt werden, was zusätzliche Deponiekosten entstehen lassen.

Aus den vorher genannten Gründen findet die Einblasung von Branntkalk oder Kalkhydrat beim erfindungsgemäßen Verfahren am Ofenkopf statt, wobei die Einblasung des Gemisches Kalkhydrat/Branntkalk-Förderluft mit hoher Geschwindigkeit (20 bis 80 m/s, je nach Ofenlänge und Flammenlänge) sowie schräg zur Ofenachse unter dem Winkel Alpha mit einem gerichteten Einblasstrahl mittels Lanze 4 erfolgt, um somit ein schnelles Durchfahren der kritischen Hochtemperaturzone zu bewerkstelligen.

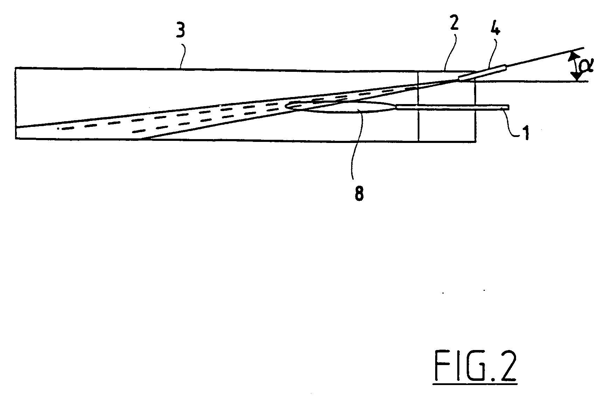

Der Winkel Alpha (Fig.2) ist abhängig von der Geometrie des Drehofens (Durchmesser, Länge). Er wird so eingestellt, daß möglichst die gesamte Länge des Ofens als Reaktionsraum genutzt werden kann und der Vorwärmer gerade noch nicht gestört wird. Die Winkelbereiche liegen erfindungsgemäß zwischen 2 und max. 12 Grad.

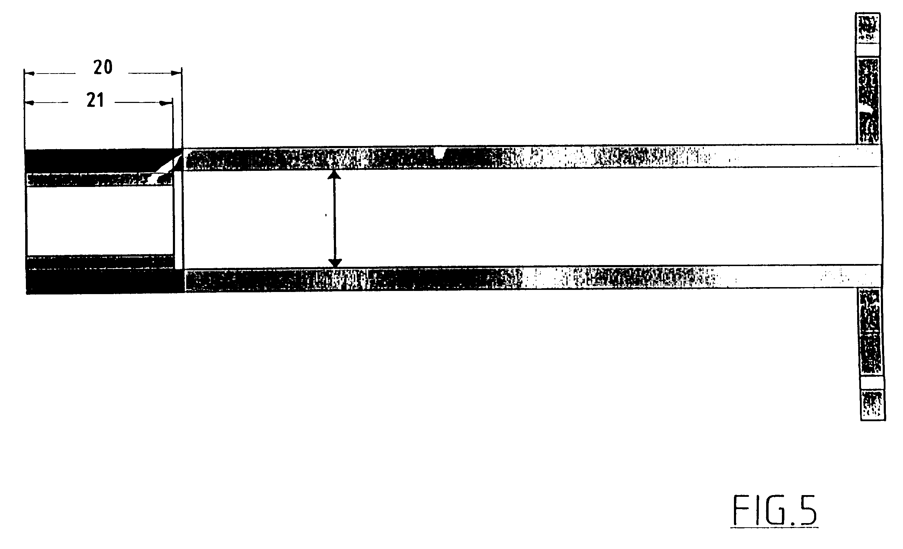

Die Lanze (Fig.5) besteht aus einem hitzebeständigen Lanzenkopf 20. Zur Feinregulierung der Austrittsgeschwindigkeit kann die Lanze mit einem Inneneinsatz 21 ausgestattet werden. Die Auslegungsdaten der Lanze (Länge, Durchmesser) zur Erzeugung eines gerichteten Strahls hängen von folgenden Parametern ab:

- Ofenrohrdimension (Durchmesser, Länge)
- Branntkalk- oder Kalkhydratqualität (Kalkgehalt, Feinheit)
- absolute Höhe der abzusenkenden $SO_2$-Emission (von/bis) und damit Branntkalk- oder Kalkhydratmenge
- Förderluftmenge.

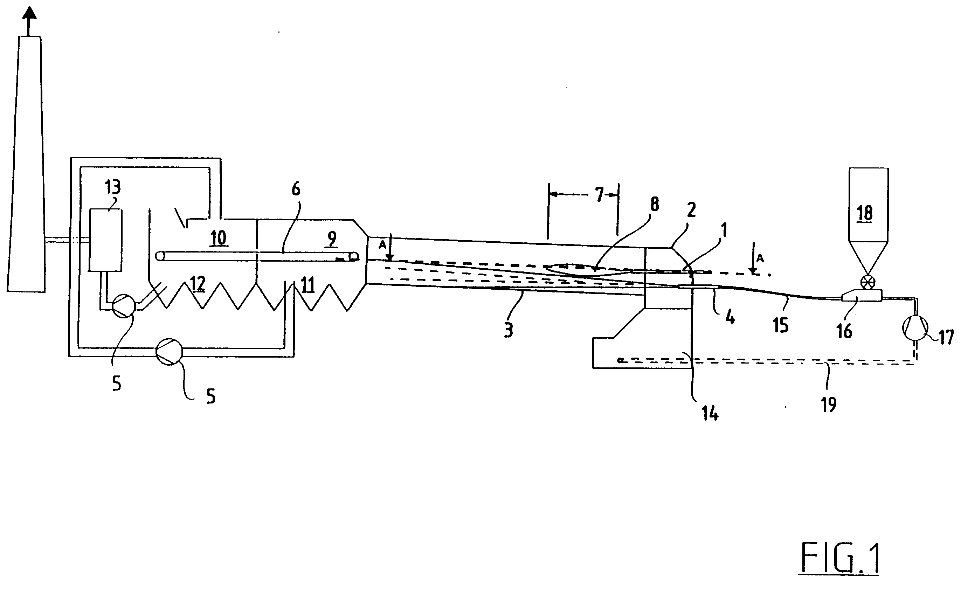

Gemäß Figur 1 werden Branntkalk oder Kalkhydrat in der Regel in einem Silo 18 vorrätig gehalten. Über geeignete Austragshilfen (z.B. Silobelüftung, Entlastungskegel etc.) wird Branntkalk/Kalkhydrat dem Dosierorgan 16 zugeführt und mit der Förderluft vermischt.

Die Erzeugung der Förderluft erfolgt über mindestens ein Förderluftgebläse 17, die angesaugte Luft besitzt Raumtemperatur (Winterbetrieb ca. 0 °C, Sommerbetrieb bis max. 70 °C). Mit dem Förderluftgebläse kann auch eine zentrale Luftversorgungseinheit gemeint sein (Stichwort:Anzapfung von Werksluft).

Alternativ zur Umgebungsluft kann als Förderluft auch heiße Kühlluft aus dem Klinkerkühler verwendet werden. Die Temperatur dieser Heißluft 19 hängt nur von den Auslegungsdaten der mit ihr in Berührung kommenden Maschinen sowie von der Hitzebeständigkeit der Förderleitung 15 ab. Die Verwendung von Heißluft hat lediglich einen Energiespareffekt für das Ofensystem, für das Verfahren der $SO_2$-Absenkung ist die Höhe der Förderlufttemperatur unerheblich.

Das Gemisch Branntkalk/Kalkhydrat/Förderluft wird über eine wahlweise flexible Förderleitung 15 der Lanze 4 zugeführt und im Ofenrohr gerichtet eingeblasen.

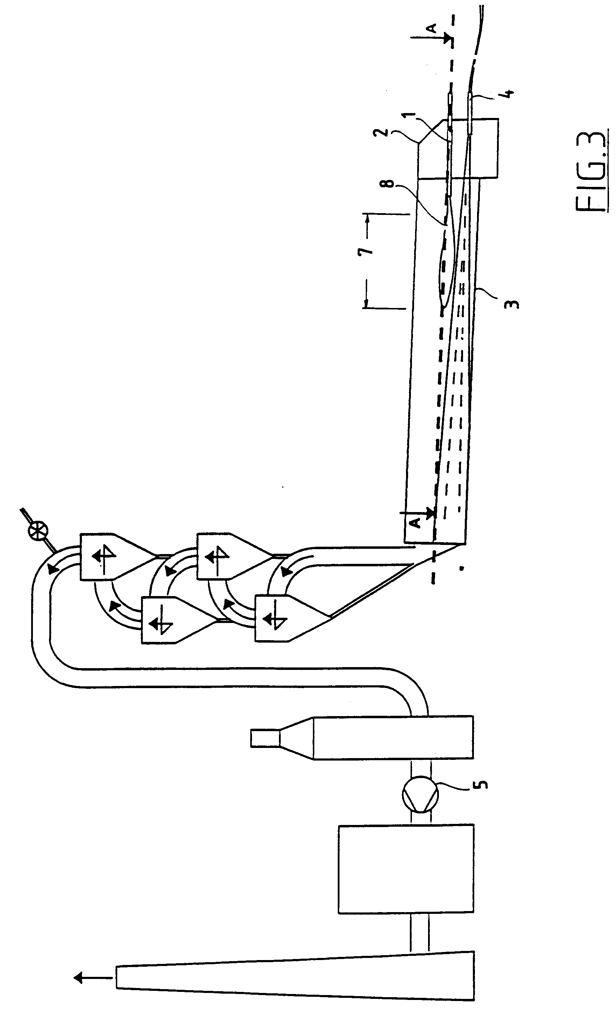

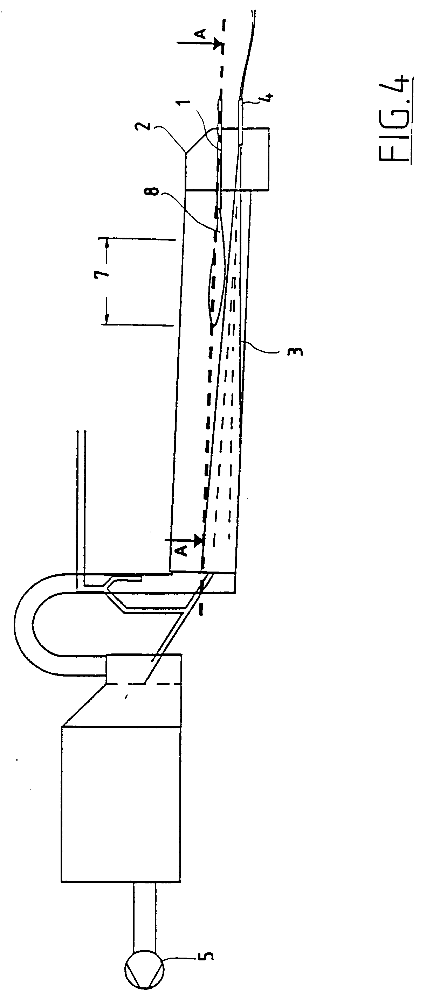

Das erfindungsgemäße Verfahren ist auch zur Absenkung des $SO_2$-Gehaltes in Rauchgasen von Schwebegaswärmetauscheröfen (Fig. 3) oder Zementdrehrohröfen (Fig. 4) geeignet. Wie bei dem Lepolverfahren kann damit eine wirtschaftliche Nutzung der Additive mit einem den Auflagen entsprechenden Entschwefelungsgrad erreicht werden.

## Patentansprüche

1. Verfahren zur Trockenentschwefelung von Rauchgasen aus Zementdrehrohröfen, bei dem zur $SO_2$-Bindung geeignete Additive, wie Branntkalk und/oder trockenes Kalkhydrat dem Ofen zugeführt werden,
   dadurch gekennzeichnet,
   daß das Additiv in eine rauchgasführende Zone am Übergang zwischen Drehrohrauslauf und Klinkerkühlereinlauf, dem sogenannten Ofenkopf, unter einem Einblaswinkel von 2-12° schräg zur Ofenachse und bei einer Einblasgeschwindigkeit von 20-80 m/s eingebracht wird.

2. Verfahren nach Anspruch 1,
   dadurch gekennzeichnet,
   daß die Zufuhr des Additivs mit einem gerichteten Einblasstrahl über eine Lanze (4) erfolgt.

3. Verfahren nach Anspruch 2,
   dadurch gekennzeichnet,
   daß die Feinregulierung der Austrittsgeschwindigkeit über eine Auswahl der Lanzengeometrie sichergestellt wird.

4. Verfahren nach Anspruch 2,
   dadurch gekennzeichnet,
   daß als Förderluft für das Additiv Umgebungsluft zur Anwendung kommt.

5. Verfahren nach Anspruch 2,
   dadurch gekennzeichnet,
   daß als Förderluft heiße Kühlluft aus dem Klinkerkühler (14) verwendet wird.

6. Verfahren nach Anspruch 1 bis 5,
   dadurch gekennzeichnet,
   daß der Zementdrehrohrofen ein Lepolofen ist.

7. Verfahren nach Anspruch 1 bis 5,
   dadurch gekennzeichnet,
   daß der Zementdrehrohrofen ein Schwebegaswärmetauscherofen mit mindestens einer Wärmetauscherstufe ist.

8. Verfahren nach Anspruch 1 bis 5,
   dadurch gekennzeichnet,
   daß der Zementdrehrohrofen ein langer Drehofen ist.

## Claims

1. Method for dry desulfurizing flue gases from rotary cement kilns by adding to the kiln additives like quick lime, dry calcium hydroxide or both for binding $SO_2$ comprising adding the additive into a flue gas-carrying zone at the transition between rotary kiln outlet and clinker cooler inlet, the so called kiln head, at an injection angle of 2° to 12° to the axis of the kiln and at an injection velocity of 20 to 80 m/sec.

2. Method of claim 1, comprising supplying the additive over a lance with a directed injected jet.

3. Method of claim 2, comprising selecting a lance geometry to ensure the fine regulation of the outlet velocity.

4. Method of claim 2, comprising adding environmental air as delivery air for the additive.

5. Method of claim 2, comprising adding hot cooling air from the clinker cooler as delivery air.

6. Method of any of claims 1, 2, 3, 4 or 5, wherein the rotary cement kiln is a Lepol kiln.

7. Method of any of claims 1, 2, 3, 4 or 5, wherein the rotary cement kiln is a suspension-type heat exchanger kiln with at least one heat exchanger stage.

8. Method of any of claims 1, 2, 3, 4 or 5, wherein the rotary cement kiln is a long rotary kiln.

**Revendications**

1. Procédé à sec pour la désulphurisation des gaz d'échappement de fours rotatifs à ciment où des additifs appropriés pouvant lier le $SO_2$ sont introduits dans le four, tels que la chaux anhydre ou l'hydrate de chaud sec,
caractérisé en ce que
l'additif est introduit dans une zone de conduite des gaz d'échappement située entre la sortie du four rotatif et l'entrée du refroidisseur de clinker, zone encore appelée tête du four, sous un angle de soufflage de 2 - 12° par rapport à l'axe du four et à une vitesse de soufflage de 20-80 m/s.

2. Procédé selon la revendication 1,
caractérisé en ce que
l'introduction de l'additif se fait dans une direction précise, par jet, et au moyen d'une lance (4).

3. Procédé selon la revendication 2,
caractérisé en ce que
la régulation fine de la vitesse de sortie est assurée par modification de la géométrie de la lance.

4. Procédé selon al revendication 2,
caractérisé en ce que
l'on utilise de l'air ambiant comme air primaire pour l'additif.

5. Procédé selon la revendication 2,
caractérisé en ce que
l'on utilise de l'air chaud sortant du refroidisseur de clinker (14) comme air primaire.

6. Procédé selon les revendications 1 à 5,
caractérisé en ce que
le four rotatif à ciment est un four Lepol.

7. Procédé selon les revendications 1 à 5,
caractérisé en ce que
le four rotatif à ciment est un dispositif de préchauffage par mise en suspension dans les gaz comportant au moins une passe d'échange de chaleur.

8. Procédé selon les revendications 1 à 5,
caractérisé en ce que
le four rotatif est un four rotatif long.

FIG.1

FIG.2

FIG.3

FIG.4

FIG.5